# EUROPEAN PATENT APPLICATION

(11) **EP 1 748 293 A2**
(43) Date of publication of application: **31.01.2007**
(21) Application number: 06116697.1
(22) Date of filing: 06.07.2006
(51) Int. Cl.: G01N 30/08, G01N 30/46

(54) **Fluidic analysis with hydrophobic and hydrophilic compounds trapping**

(30) Priority: 25.07.2005 WO PCT/EP2005/053608
(71) Applicant: Agilent Technologies, Inc., Santa Clara, CA 95051 (US)
(72) Inventor: Grimm, Rudolf, 82131, Gauting (DE)
(74) Representative: Barth, Daniel Mathias

(57) **Abstract**

An analysis system is provided, suitable to analyze fluidic samples (FS1, FS2). Said analysis system comprises at least two trapping columns (T1, T2), wherein the first one is adapted for trapping hydrophobic compounds of the fluidic sample (FS1,FS2) and the second one is adapted for trapping hydrophilic compounds of the fluidic sample (FS1,FS2). The first (T2) and second (T2) trapping columns are arranged in fluidic communication.

## Description

The present invention relates to analysis of fluidic samples.

### BACKGROUND ART

Analyzing samples consisting of complex mixtures resulting e.g. from biological materials such as cells, organisms, or organic tissues became increasingly important during the last decade. Scientists performing research in the domain of biology, biochemistry, and in further related domains were focusing on the development of technologies permitting to precisely, rapidly, and efficiently analyze a sample qualitatively and quantitatively.

Said mixtures may be protein mixtures, polysaccharides, regulatory substances, carbohydrates, nucleic acids, amino acids, nucleotides, nucleosides, fats, fatty acids, and organic acids or metabolic mixtures. The last are usually composed of peptides, sugars, fatty acids, steroids, nucleotides, carbon acids, vitamins, hydrates, nucleic acids, amino acids, nucleotides, nucleosides, fats and a plurality of other additional low molecular compounds (having a molecular weight up to 2 kDa). The qualitative and quantitative analysis of metabolites is usually referred to as metabolomics. Similarly the qualitative and quantitative analysis of proteins is usually referred to as proteomics.

Accordingly samples being subjected to metabolomics may contain the ensemble of low molecular compounds being produced in an organism due to metabolism, or at least a subfraction of it, thus being of high complexity. So, a human metabolom sample e.g. requires the performance of multiple fractioning- or separating steps due to its composition of up to 10 000 compounds. Said complex mixture needs to be pre-fractionated into its classes prior to performance of further quantitative and/or qualitative analysis.

US 6849396 B2 to Schneider, Luke V. discloses methods for conducting metabolomics. Purifying of metabolites and conducting metabolic analyses generally involves determining metabolic flux values for a plurality of target analytes by monitoring the relative isotope abundance of a stable isotope in a substrate labeled with the stable isotope and/or one or more target metabolites formed through metabolism of the labeled substrate. Furthermore, the methods are based on electrophoretic methods to separate the target analytes from other components within the sample being analyzed. Further methods involve administering a substrate labeled with a stable isotope to a subject.

US 20040147040 A1 to Bluggel, M. and Schurenberg, M. describes methods and instrumentation for two or multidimensional separations of biosubstance mixtures, especially protein mixtures, for mass spectrometric analysis.

US 20030168392 A1 to Masuda, J. et al. publishes a multi-dimensional liquid chromatography separation system, based on the difference of two or more kinds of separation modes, (e.g., chemical or physical properties of analytes) which may improve separations when samples contain complex mixtures. Here, the analytes separated on the 1^{st} analysis system (consisting of the 1st column and the 1^{st} mobile phase) will be trapped onto individual trapping columns. Then the trapped analytes will be loaded onto the 2^{nd} analysis system consisting of the 2^{nd} column and the 2^{nd} mobile phase. The trapping and loading mechanism consists of a combination of switching valves necessary to produce the serial separations.

Once the pre-fractionation is done and thus the desired class of metabolites or proteins and peptides can be handled separately, the appropriate technology can be chosen to carry out the succeeding analytical steps such as mass spectrometry, UV, fluorescence or immuno-histochemical detection. For peptidomics, e.g. one may follow the methods described in US 20040180449 A1 to Hamstra A.J. et al. It refers to methods for separating or purifying samples, for example separating peptides or peptide groups from a protein sample.

### DISCLOSURE

It is an object of the invention to provide an improved fluidic sample analysis. The object is solved by the independent claims. Preferred embodiments are shown by the dependent claims.

According to embodiments of the present invention, an analysis system to analyze fluidic samples is provided. Said analysis system generally comprises two or more trapping columns being connected in series, thereby allowing to perform separation of hydrophobic and hydrophilic compounds.

In one embodiment the further separation and characterization is obtained due to combination of the trapping columns with analytical columns: Once separated by passing the trapping columns, the hydrophobic and hydrophilic compounds become fractionated directly by use of analytical columns that are connected to the trapping columns, whereby the subsequent identification of the fractionated compounds is facilitated. Accordingly, a poly-dimensional analytical device is provided which allows carrying out an analysis without or at least reduced delay, since the sample may be analyzed completely in one apparatus.

Further aspects refer to analyzing said biological fluidic samples comprising hydrophobic and hydrophilic compounds, taking into consideration that it is most desirable to analyze even smallest molecules such as small peptides. Additional advantages result when the system is miniaturized to chip size, accordingly permitting the separation and analysis of very small sample volumes, which means that the number of analyses per time can be increased.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings.

**Fig. 1** shows schematically an analysis system comprising a C-18 pre-column, connected to a hydrophilic pre-column, and corresponding analytical columns.

**Fig. 2** shows schematically an analysis system comprising a strong cation exchanging (SCX) column and a C-18 pre-column connected to a graphite pre-column, and corresponding analytical columns, thus it shows a setting being suitable to perform the complex analytical procedure of a metabolomics and proteomics sample.

**Fig. 3** shows schematically the analysis system of **Fig. 2** with an additional C-18 pre-column and corresponding analytical column, being coupled via a valve to the channel interconnecting the SCX column with the C-18 pre-column.

Embodiments of the present invention generally refer to a substantially complete analysis of biological fluidic samples such as peptides or metabolites, comprising hydrophobic and hydrophilic compounds, by performance of one single procedure in a single analysis system.

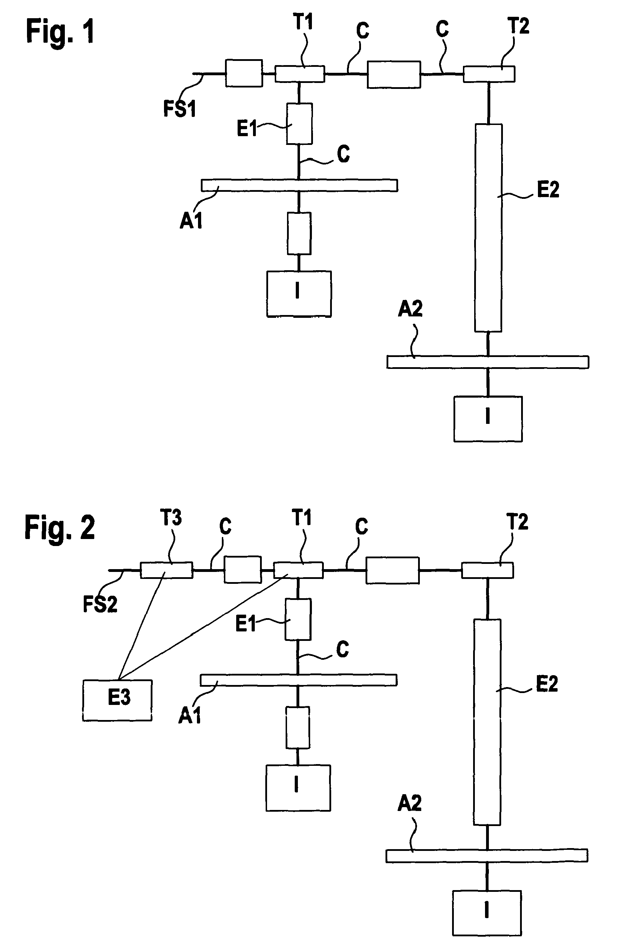

In **Fig. 1,** an analysis system is composed of two different trapping columns or pre-columns T1,T2, respectively; one of which being adapted to trap hydrophobic compounds, the other one being adapted to trap hydrophilic compounds. These two trapping columns are in fluidic communication, the second trapping column T2 being arranged downstream to the first trapping column T1. A plurality of such trapping columns can be arranged in series. While in one embodiment the column(s) for trapping hydrophobic compounds is/are arranged upstream to the column(s) for trapping hydrophilic compounds, the order of arrangement of the hydrophobic and hydrophilic trapping columns can be varied subject to the specific application(s). The column(s) for trapping hydrophobic compounds may also be arranged downstream to the column(s) for trapping hydrophilic compounds. Also, hydrophobic and hydrophilic trapping compounds may be arranged e.g. in an alternating order.

Frequently used and well known hydrophilic trapping columns are graphite columns, which are suitable for the use as pre-columns and as trapping columns. But the embodiments of the present invention are not intended to be limited on the use of graphite columns, since other materials than graphite might be suitable, too. The person skilled in the art might select a hydrophilic column comprising a material known from Hydrophilic Interaction Chromatography (HILIC). Substantially, the HILIC stationary phase is a polar material such as silica, diol, amino compound, cyan compound or the like, or a composition thereof. Even combinations of polymeric materials with one of more of the aforesaid compounds might be considered.

Furthermore, the commonly used C-18 column, which is a well known silica column with the appropriate pore size to trap small molecules to proteins, may be substituted by another column such as C-4-type, C-8-type, or any stationary phase with alkyl-chains up to C-30. Accordingly, the term "C-18 column" as used in the following is not intended to be limiting.

The trapping columns T1, T2 may thus provide a device for a first analytical dimension. Each of the trapping columns T1, T2 may then be connected to an analytical column A1, A2; said analytical columns A1, A2 may provide a second analytical dimension due to the further fractionations of the components according to an organic gradient.

In a preferred embodiment, a C-18 pre-column is selected as the first trapping column T1, and a graphite pre-column as second trapping column T2. Downstream to the C-18 pre-column T1, an analytical C-18 column A1 is located. Downstream to the second pre-column T2, which may be a graphite pre-column, an analytical graphite column A2 is arranged, wherein graphite is used exemplarily for any suitable hydrophilic solid phase.

In Fig. 2, a third type of column is placed in the arrangement allowing refining the resolution of the analytical system. A third column T3 is arranged, preferably upstream to the first trapping column T1, in fluidic communication with the first trapping column T1. As third column or T3-column, respectively, a strong ion exchanging column (SCX) may be used e.g. in order to have the option of separating compounds comprised of metabolom and proteome containing sample. The embodiments of the present invention are not limited to the use of SCX columns as T3 column; one may as well select the third column co the group of affinity-columns, thus columns which comprise a material which is adapted to provide a covalent or non covalent-binding of the molecule of interest.

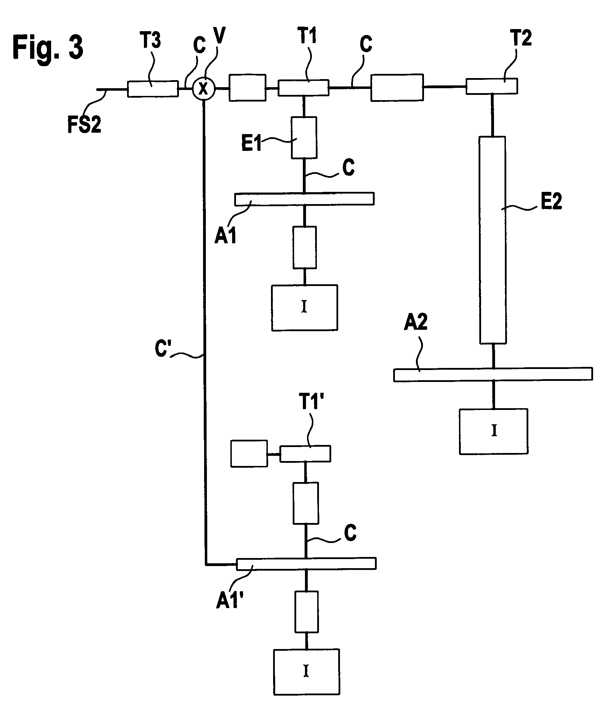

Generally, the fluidic communication between two of the trapping columns T1, T2, T3, e.g. connected in series and/or between a trapping and an analytical column A1, A2, may be provided by use of a tube or a channel C. One or more of such channels C may be equipped with a valve or a fluid flow controller in order to determine a value relating to the flow of a fluid, eluent, or sample. If one single column of the type "third column" T3 or "first column" T1 is merging into more than one downstream column, the interconnecting tube or channel C could be provided with a valve e.g. coupled to one or more bypassing systems. The bypassing system could comprise another trapping and analyzing column T1', A1', as shown in **Fig. 3.**

The above described embodiments may be advantageously miniaturized to micro size, e.g. for use in a microfluidic device which comprises the analysis system of the above embodiments. Such microfluidic device could be designed as single- or as a multilayer microfluidic device, permitting to perform an economic analytical procedure with a high resolution. Such microfluidic device may be embodied e.g. as described in US 5571410, US RE36350, US 5658413, US 5882571, US 5804022, US 6093362, or US 5645702.

**Fig. 1** shows schematically an embodiment of the present invention. A fluidic sample FS1 is provided to the first trapping column T1 of the analysis device, which may be a C-18 pre-column herein. Said column T1 serves as trap for the hydrophobic components such as hydrophobic metabolites of the sample. The fluid (after leaving the first trapping column T1) is then directed onto a second trapping column T2 that may be a graphite column or another type of hydrophilic column. Said second column T2 is suitable to trap the hydrophilic metabolites or compounds, respectively. The second trapping column T2 is preferably located downstream to the first one, accordingly the fluidic sample flows in the C-18 pre-column T1 firstly, and then in the hydrophilic or, respectively, graphite column T2.

If desired, one may connect a plurality of first and second tapping columns T1, T2, wherein preferably the sample first passes the hydrophobic metabolites trapping columns and then the hydrophilic metabolites trapping columns.

After trapping the hydrophobic and hydrophilic metabolites onto the columns T1, T2, an elution might be performed. As known to those skilled in the art, elution is usually provided by rinsing the selected column with a fluid or eluent, respectively.

In a first elution process E2, elution of the components trapped on the second column T2, which is the hydrophilic pre-column T2, may be provided. Said components are directed onto an analytical graphite column A2, or onto any other suitable hydrophilic analytical column, become fractionated according to an organic gradient. Then, identification I and quantification of the separated components can be done, e.g. using mass spectroscopy (MS) and/or MS/MS- spectroscopy.

In a second elution process E1, elution of the components trapped on the first column - the C-18 pre-column - T1 may be provided. Components are flushed by using an eluent onto an analytical column A1 (e.g. a C-18 column) and become separated according to an organic gradient. As in E2, identification and quantification of the separated components may be done e.g. by mass spectrometry (MS) and/or MS/MS- spectroscopy. Such MS-systems may be TOF (time of flight spectroscopy), Q-TOF (Quadrupole-Time-Of-Flight spectroscopy) or FT-MS (Fourier transformed mass spectroscopy), or ion-trap mass spectrometry.

The analytical performance is known to those skilled in the art.

The afore-described embodiments may allow performing a time-saving analysis of highly complex samples, combining fractionation or separation, respectively, and identification efficiently.

Fig. 2 illustrates an example of an embodiment allowing to carry out proteomics and metabolomics in one procedure. Three types of columns are connected in series.

First, a complex fluidic sample FS2 is acidified by adding of acids such as acetic acid or formic acid or another suitable weak acid, charging peptide- and amine-compounds positively. Then, the fluidic sample FS2 is injected into the analytical system, being directed immediately onto a third column T3, which is an SCX column (strong cation exchange column) herein.

Positively charged compounds are retained in said third column T3, whereas neutral or negatively charged compounds of the fluidic sample FS2 pass said column and flow through the C-18 pre-column T1. The C-18 pre-column T1 retains hydrophobic metabolites and the uncharged peptides.

The second column T2 - which is the last one in the series and which is a graphite or other hydrophilic pre-column-, retains the hydrophilic metabolite compounds and the hydrophilic and small, non-charged peptide compounds.

In the following, the compounds retained in said hydrophilic pre-column T2 are eluted when the elution E1 is performed and flushed from said pre-column T2 onto the analytical graphite column A2. Herein, further fractionation is performed according to an organic gradient. Then, the identification I is done e.g. by use of mass spectroscopy and/or MS/MS analyses as described above.

Afterwards, the compounds which have been retained on the C-18 pre-column T1 become eluted in the second elution process E2 and are directed onto the analytical C-18 column A1, become fractionated according to an organic gradient, and subjected to the identification I, too.

After the first and the second trapping- and analytical columns T1, T2, A1, A2 are unloaded, the components retained on the SCX column become eluted, too, by performing a third elution process. This may be done according to a salt step gradient elution. Therefore, the components can be flushed with saline solution from the third column T3; the gradient is obtained by increasing the salt concentration step-wise (e.g. 20 mM, 40 mM, 60 mM, 80 mM, 100 mM, 250 mM, 500 mM ammonium acetate).

Another option is to flush by use of the back flush method on the analytical C-18 column T2 in order to perform fractionation according to an organic gradient. Subsequently the identification I is performed.

Fig. 3 depicts a further embodiment allowing to perform the eluting of the third column T3 in parallel to the eluting of the pre-columns T1, T2. Additional pre-and analytical columns T1', A1' are coupled via a valve V to the channel C1, which provides the fluidic communication between the SCX column and the C-18 pre-column. The fluidic sample FS2 is injected into the analysis system, and an eluent, such as a saline solution, elutes the trapped positively charged molecules from the SCX column and transports them via the bypass, comprised of valve V and additional channel C', to the additional trapping- and analyzing column T1', A1'.

Embodiments may be performed by use of conventional trapping columns, e.g. having lab-size, or a microfluidic arrangement. One can design micro sized C-18 columns as well as micro sized graphite columns. A chip may be designed on which chip the micro pre-columns (SCX or affinity column, C-18 column and graphite-column or other hydrophilic column) T1, T1', T2, T3 and the analytical columns (analytical C-18 column and analytical graphite-column or other hydrophilic column) A1, A1', A2 are arranged.

In one embodiment components of samples of this complex composition, comprised of proteomic and metabolomic compounds, can be retained by direct combination of strong cationic exchange column, C-18 pre column, and graphite pre-column, providing a complete retaining of that components, performing elution until the corresponding analytical column, and performing analyses afterwards.

## Claims

1. An analysis system for analyzing a fluidic sample (FS1,FS2), comprising:
a first trapping column (T1) adapted for trapping hydrophobic compounds of the fluidic sample (FS1, FS2), and
a second trapping column (T2) adapted for trapping hydrophilic compounds of the fluidic samples(FS1, FS2),
wherein the first (T2) and second (T2) trapping columns are arranged in fluidic communication.

2. The analysis system of claim 1, comprising at least one of:
- a first analytical column (A1) connected downstream to the first trapping column (T1);
- a second analytical column (A2) is connected downstream to the second trapping column (T2).

3. The analysis system of claim 2, comprising at least one of:
- the first trapping column (T1) is one of a C-4 to a C-30, but preferably a C-18 pre-column,
- the analytical column (A1) which is connected downstream to the C-18 pre-column is one of an analytical C-4 to a C-30, but preferably a C-18 column,
- the second trapping column (T2) is a hydrophilic, preferably a graphite, pre-column,
- the analytical column (A2) which is connected downstream to the hydrophilic, pre-column is an analytical hydrophilic, preferably an analytical graphite, column.

4. The analysis system of claim 1 or any one of the above claims, comprising a third trapping column (T3) arranged upstream to the first trapping column (T1).

5. The analysis system of claim 4, wherein said third trapping column (T3) is one of a strong ion exchange column and an affinity column.

6. The analysis system of claim 1 or any one of the above claims, comprising at least one of a tube and a channel (C) for providing a fluidic communication between columns (T1, T2, T3, A1, A2) connected in series.

7. The analysis system of claim 6, comprising at least one of:
said tube comprises at least one of a valve (V) and a fluid flow controller;
said channel (C) comprises at least one of a valve (V) and a fluid flow controller;
a bypassing tube coupled to a valve (V) comprised in the tube, wherein the valve (V) provides the fluidic communication between the third trapping column (T3) and the first trapping column (T1) and permits a bypassing of fluid not meant to be directed onto the trapping columns (T1, T2);
a bypassing channel (C') coupled to a valve (V) comprised in the channel (C), wherein the valve (V) provides the fluidic communication between the third trapping column (T3) and the first trapping column (T1) and permits a bypassing of fluid not meant to be directed onto the trapping columns (T1, T2);
an additional trapping column (T1') and an additional downstream analyzing column (A1'), both of which being in fluidic communication, wherein the additional trapping column (T1') is coupled to a valve (V).

8. The analysis system of claim 1 or any one of the above claims, comprising at least one of:
the analysis system is a microfluidic device ;
the analysis system is a multilayer microfluidic device;
the second trapping column (T2) is arranged downstream of the first trapping column (T1);
the first trapping column (T1) is one of a C-4 to a C-30, preferably a C-18, pre-column;
the second trapping column (T2) is a hydrophilic, preferably a graphite, pre-column.

9. A method of analyzing a fluidic sample (FS1, FS2), comprising:
- directing the fluidic sample (FS1, FS2) onto two trapping columns (T1, T2) being in fluidic communication and connected in series,
- trapping hydrophobic compounds comprised in said fluidic sample (FS1, FS2) in a first trapping column (T1) of the two trapping columns (T1, T2),
- trapping hydrophilic compounds comprised in said fluidic sample (FS1, FS2) in a second trapping column (T2) of the two trapping columns (T1, T2).

10. The method of the preceding claim, comprising at least one of:
- eluting the hydrophilic compounds of said second trapping column (T2),
- directing the eluted hydrophilic compounds onto an analytical column (A2) being connected downstream to said second trapping (T2) column, whereby fractionation of the hydrophilic compounds is performed according to an organic gradient,
- identifying the hydrophobic compounds subsequent to fractionation,
- eluting the hydrophobic compounds of said first trapping column (T1),
- directing the eluted hydrophobic compounds onto an analytical column (A1) being connected downstream to said first trapping column (T1), whereby fractionation of the hydrophobic compounds is performed according to an organic gradient,
- identifying the hydrophobic compounds subsequent to fractionation.

11. The method of claim 9 or any one of the above claims, comprising at least one of:
- acidifying said fluidic sample (FS2), whereby peptides and amines comprised by the fluidic sample (FS2) become - at least partially - positively charged, prior to injecting said fluidic sample (FS2) into the analytical system,
- directing said fluidic sample onto a third trapping column (T3) being arranged upstream to the first trapping column (T1) prior to directing the fluidic sample (FS2) onto said first and second trapping column (T1,T2), whereby the positively charged peptides and amines become trapped in said third trapping column (T3).

12. The method of the preceding claim, comprising at least one of:
- subjecting the first trapping column (T1) and the analytical column (A1) to elution so that they are free from hydrophobic and hydrophilic compounds,
- eluting of said peptides and amines stepwise from said third trapping column (T3),
- directing the eluted peptides and amines onto the first trapping column (T1),
- trapping said peptides and amines on said first trapping column (T1),
- eluting said peptides and amines,
- directing the eluted peptides and amines onto the analytical column (A1), thereby obtaining fractionation according to an organic gradient,
- identifying the fractionated peptides and amines subsequent to fractionation;

13. The method of claim 11 or any one of the above claims, comprising at least one of the features:
- eluting of said peptides and amines stepwise from said third trapping column (T3),
- bypassing the eluted peptides and amines via a valve (V) and via a channel (C') onto an additional trapping column (T1'),
- eluting said peptides and amines,
- directing the eluted peptides and amines onto the analytical column (A1'), thereby obtaining fractionation according to an organic gradient,
- identifying the fractionated peptides and amines subsequent to fractionation.

14. The method of claims 12 or any one of the above claims, comprising: performing the stepwise elution by use of a saline solution.
